# EUROPEAN PATENT APPLICATION

(11) **EP 2 386 989 A1**
(43) Date of publication of application: **16.11.2011**
(21) Application number: 10305510.9
(22) Date of filing: 12.05.2010
(51) Int. Cl.: G06Q 10/00

(54) **Dynamic and customizable email distribution list**

(71) Applicant: Alcatel Lucent, 75008 Paris (FR)
(72) Inventor: Cabasse, Gilbert, 29228 Brest (FR); Elleouet, Jerome, 29228 Brest (FR)
(74) Representative: Shamsaei Far, Hassan

(57) **Abstract**

A method of authenticating a user of a video terminal to an authentication server by means of a cellular phone, the method comprising the steps of, on the authentication server,
generating (101) a machine-readable code,
sending (102) the machine-readable code to the video terminal by means of a computer network,
receiving (103) a credential from the cellular phone by means of a cellular network, and
comparing (104) the machine-readable code to the credential, the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.

## Description

### Field of the Invention

The invention relates to a method of dynamically customize email distribution list.

### Background

Email client users are wondering how to build the adequate list of people to send their emails, when the location and/or the skills of the people are always in evolution.

Users can have also another problem, when a first mail has been sent to a given population, according to their characteristics, and one of the recipients uses the "reply to all": the replier often wishes to reach all the people matching the initial selection criteria, and not only the people that received the initial mail.

Up to now, the user has two choices:
- Either he knows exactly who he should send this mail to, so he picks the recipients in a directory.
- Or, he may not know all the people that should receive the mail, so he tries to find a pre-defined mailing list,
- which raises several problems:
   o The predefined mailing list may not exist, if this corresponds to a new need
   o Keeping all the mailing lists up-to-date is difficult.
      - Some shared mailing lists are maintained centrally (EG, by IT people), and it is difficult to inform those people of all the changes that happens in organization.
      - Some shared mailing lists can be modified by individuals, via subscription/un-subscription mechanism, but it is difficult for the individuals to know which mailing lists should be modified
      - Some mailing lists are private (build by an individual for his how needs), so others can't modify those.
- Discussions threads relative to specific topics exist and can be a solution but the response can take a long time to come because people need to connect to the thread to know your question.

In prior art, an existing solution describes a way to build an email alias (list of contacts to reach) from a communication context (email based discussion, financial transaction).

But to build the alias, this system needs to have a context with person involved in this context.

Another prior art, US2009/0282110 discloses how to build dynamically the mailing list,.

But the problem is that the way to build this list is done programmatically, meaning that IT people define an alias, link this alias to a program that collects the member of the list. So final user can only use aliases that are predefined.

Another problem for this solution is the difficulty for the IT team to foresee the needs of all the users, and define the corresponding programs.

### Summary

This invention discloses the user to use a simple syntax or GUI in order to define the criteria to be used for creating a dynamic mailing list.

### Description of the Embodiments

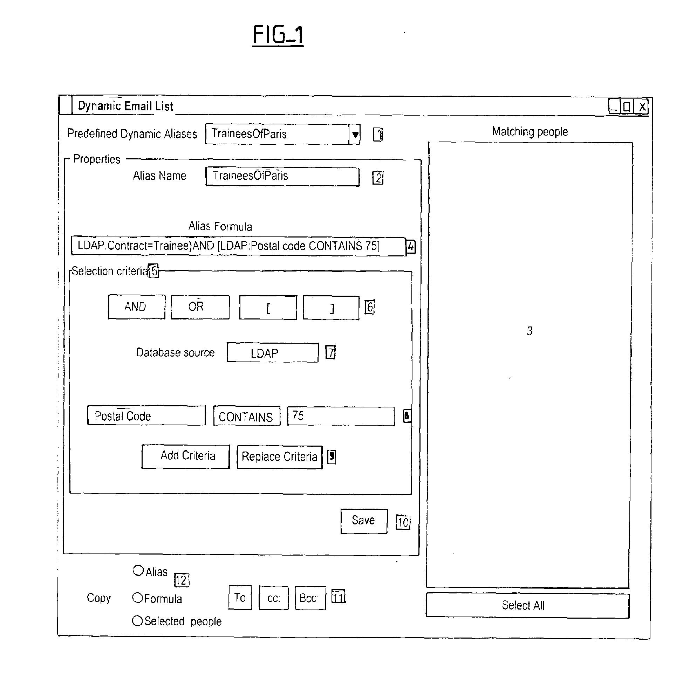

In the following, a method according to the invention is elucidated by way of example, referencing Fig. 1, 2 and 3

In the following embodiment, will also be presented the possibility to specify that the reply will only be sent to the original receivers.

The whole system to implement the invention allows the users:
- to use predefined, fixed formulas (public, defined centrally), (anterior art : IBM patent)
- to use predefined formulas that takes input parameters (this invention)
- to use privately stored formulas (this invention)
- to use formulas that are not stored, only used for a single mail (this invention)

The user will use a simple syntax or GUI in order to define the criteria to be used for creating a dynamic mailing list.

This syntax is then evaluated by the system, which performs a search in some database(s), and returns a list of matching people.

At that point the user has three choices:
- either use directly the selection-syntax in the addresses fields of the mail (To: and cc:)
- or have a place-holder name (Alias) displayed in the address field (so that recipients will not be tempted to edit the formula)
- or pickup some or all the matching persons, and copy them to the addresses fields (existing anterior art)

If the user has chosen one of the two first solutions, when the mail is sent, the email server receives the request, evaluates the list of addresses, and sends the mail to all of them.

When one of the recipients uses the "reply to all", the selection formula will be evaluated again by the email server, so the mail will be received by all matching people at the time of the reply, and not only the initial receivers.
The user opens an email and fills the email subject and body as usual. In the 'TO' field, he does not set email addresses of recipient directly.

The invention discloses the use of a formula base on a syntax, a grammar, to select the people.

In figure 1, selector 1 Allows to select a predefined list; the list could displays differently the public list (not modifiable by a standard user) and the private list (that the user can modify).
When the selection in 1 is done, items 2, 3 and 4 are updated, showing the definition of the list, and the people that are matching the criteria.

Then the user can edit the formula, directly typing in frame 4 or using the controls 6, 7 and 8.
Please note that when selecting a database source in 7, it updates the content of the list "database fields" of line 8, so the user can select the criteria offered by this specific database.
The formula can contain some parameters of different source, so it is possible to mix criteria taken from different databases: the conventional LDAP, or any source that could contain information on the persons (Human Resources database, social networks servers)...
Every time the formula is modified, the list of matching people is updated.

One may find a formula close to your needs, eg a public dynamic mailing list redacted by the IT service (according to the IBM patent), and customize it to match your precise needed. Eg, if user want to reach the trainees from another department, you just need to edit the '75' value, the IT people do not need to predefine an alias for each department.

It is possible to save the formula, using the same alias, or a different one (equivalent to the "save as"), using controls 2 and 10.

Then the user can modify the addresses fields of the mail being edited, using the controls 11 and 12.

the functionalities behind the choices of controls 12, according to the sample illustrated in figure 1 are:
- "Alias": then the address field contains "TraineesOfParis" (item 2), even if the initial formula was modified and not saved. The real formula 4 is stored inside the mail (in the hidden parameters of the mail), so this is this formula that is used by the email server (for sending, and when a reply-to-all will be used latter) to find the matching persons.
- "Formula": the address field then contains "(HR.Contract=Trainee) AND (LDAP:Postal_code CONTAINS 75)", so you explicitly show to the recipients what were you criteria used to select them.
- "Selected people": old school way to send mails, if a recipient performs a reply-to-all, the list is not dynamic, and the reply will be return only to the same people that received the initial mail.

In the first two choices "Alias" and "Formula", the hidden fields of the mail will also contain the exact list of people that received the mail. So, in the mailer of the recipient, the user can ask to view the list of all the recipients (even if his mail server cannot reach the same databases as the mail server of the sender) , and can choose to perform a reply-to-all to only those, and not to the dynamic list.

So only selected people can be added there, using the button 13.

It can be noted that not every people will be allowed to dig into the Human Resources database, so the system will check if the database is declared "public", and if not so, will not allow inserting the formula in the mail.

The formula can be used by the user that as the right on the database, the Alias can be inserted in the To: or cc: fields, but the recipients will not be allowed to see the formula in any manner, and so perform a reply-to-all.

is the typical flow of information when a user sends a new email
- Using his Email Client Application ECA1, the user is beginning the redaction of a new mail, and wants to select the addresses, so he opens the dialog shown in figure 1, and defines a dynamic people selection criteria, this criteria is send to the dynamic list server DLS, using the simplified syntax **(1)**
- the DLS interprets the simplified syntax, and transmute the request into a request that can be understood by the database system.

For example, the "(HR.Contract=Trainee) AND (LDAP:Postal_code CONTAINS 75)" simplified syntax could be translated, according to some pre-defined business rules, into a SQL request:
*SELECT * FROM db1.HRtable, db2.LDAPtable*
*WHERE (HR.Contract=Trainee) AND (LDAP:Postal_code has '75')*
*JOIN (HRtable.EmployeeID=LDAPtable.userID)*

- The request is then sent to the database that replies with the matching people 2, and the reply **3**.is provided to ECA1
- The client fills-up the addresses fields, and sends the email to his Email Server ES1.
- ES1 re-evaluates the list of the recipients **5, 6** and **7** ;
- ES1 links the formula of the dynamic list with its own domain name, then sends the mail to all recipients (**8** and

When the recipient performs a reply-to-all of an incoming mail that used a dynamic list:
- the mail is transmitted to the mail server of the recipient **10;**
- ES2 transmits the mail to the mail server a dynamic list linked to the dynamic list **11**
- ES1 evaluates the dynamic list **12,13** and **14**;
- The mail is transmitted to all people that match the dynamic list **15.**

The implementation of the dynamic list in client-applications could be directly coded into the client application, or could be provided as a plug-in compatible with existing mail clients, like MS Outlook or IBM Lotus Notes. Alcatel-Lucent's OmniTouch Unified Communications provide such plug-in (in both Outlook and Notes).

The DLS can retrieve information on people from many sources, and not only from database. It could also query web sites (social networks...), documents.

Additional modules could then be necessary between the DLS and the sources that do not offer direct database query; it could be adaptors of different types, calling specific APIs.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

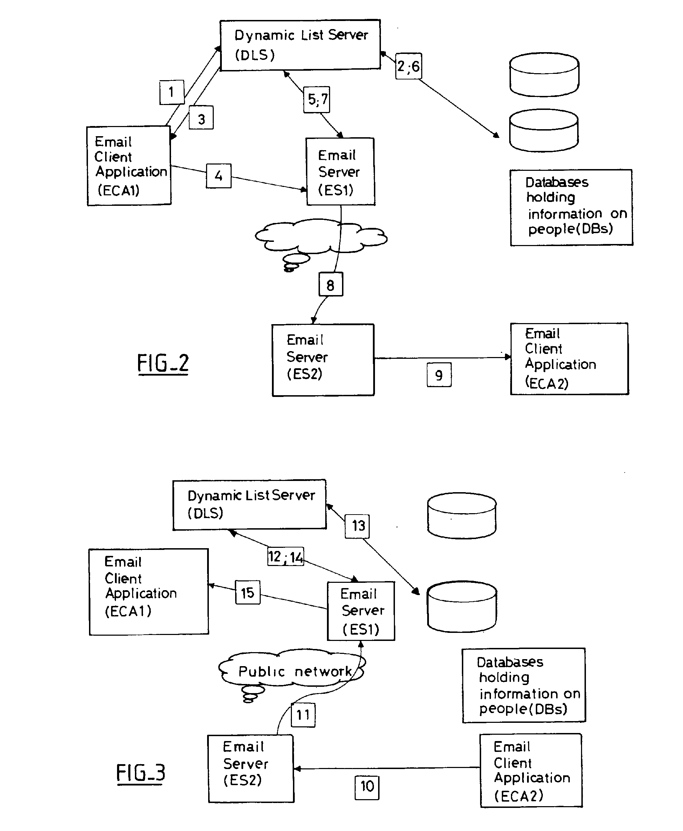

The working mode, described in figure 2, is based on the interaction between the mobile phone running the software client and the central server and between the connected device and the central server. Once the personal session is started, the user can directly interact on the connected device without using the mobile phone, except for closing the connection in case of urgent leave.

The Figure 3 presents the device in 4 modes:
- Standby mode allows the user to touch the screen to start a session
- When showing the tag, it is possible for a user to send the identity of the device to be used
- The device is asking for the session code to securely open the session
- When in-session, the device presents the personal environment and always shows the "End session" part of the screen to disconnect

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of authenticating a user of a video terminal to an authentication server by means of a cellular phone, the method comprising the steps of, on the authentication server,
generating (101) a machine-readable code,
sending (102) the machine-readable code to the video terminal by means of a computer network,
receiving (103) a credential from the cellular phone by means of a cellular network, and
comparing (104) the machine-readable code to the credential,
**characterized in that** the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.

2. A method according to claim 1, **characterized in that** the machine-readable code is a barcode.

3. A method according to claim 2, **characterized in that** the machine-readable code is a linear barcode.

4. A method according to claim 2, **characterized in that** the machine-readable code is a matrix code.

5. A method according to claim 3, **characterized in that** the machine-readable code is a flashcode.

6. A method according to any of the preceding claims, **characterized in that** the method comprises the further step of receiving an identification of the user from the cellular phone by means of the cellular network.

7. A method according to claim 6, **characterized in that** the method comprises the further step of, prior to initiating the terminal session, confirming the identification.

8. A method according to any of the preceding claims, **characterized in that** the session code and the further session code are human-readable codes suitable for entry by means of a touchscreen of the video terminal.

9. A computer program product comprising computer-executable instructions for performing a method when the program is run on a computer, the method comprising the steps of
generating (101) a machine-readable code,
sending (102) the machine-readable code to a video terminal by means of a computer network,
receiving (103) a credential from a cellular phone by means of a cellular network, and
comparing (104) the machine-readable code to the credential,
**characterized in that** the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.

10. A device programmed or configured to perform a method comprising the steps of
generating (101) a machine-readable code,
sending (102) the machine-readable code to a video terminal by means of a computer network,
receiving (103) a credential from a cellular phone by means of a cellular network, and
comparing (104) the machine-readable code to the credential,
**characterized in that** the method comprises the further steps of, in case of a match (105) between the machine-readable code and the credential,
receiving (106) a session code from the cellular phone by means of the cellular network,
receiving (107) a further session code from the video terminal by means of the computer network,
comparing (108) the session code to the further session code, and,
in case of a further match (109) between the session code and the further session code, initiating (110) a terminal session.

## Amended claims

### Amended claims in accordance with Rule 137(2) EPC.

**1.** A method of creating a dynamic mailing list, wherein a specific syntax is used in order to define the criteria to be used for creating said mailing list.

**2.** A method of creating a dynamic mailing list according to claim 1 , wherein said specific syntax is then evaluated by the mailing list creating system, said mailing list creating system performs a search in some database(s), said mailing list creating system returns a list of matching people.

**3.** A method of creating a dynamic mailing list according to any of the previous claims, wherein said specific syntax uses predefined formulas composed of input parameters.

**4.** A method of creating a dynamic mailing list according to claim 1, a specific GUI is used in order to define the criteria to be used for creating said mailing list.
